# EUROPEAN PATENT APPLICATION

(11) **EP 0 801 514 A2**
(43) Date of publication of application: **15.10.1997**
(21) Application number: 97105488.7
(22) Date of filing: 02.04.1997
(51) Int. Cl.: H04R 5/02

(54) **Video unit support base with built-in acoustic functions**

(30) Priority: 10.04.1996 IT TO960076 U
(71) Applicant: Olivetti Personal Computers S.p.A., 10015 Ivrea (Torino) (IT)
(72) Inventor: Gatti, Sergio, 10010 Azeglio (TO) (IT); Palermo, Giovanni, 10015 Ivrea (TO) (IT); Peduto, Vittorio, 10015 Ivrea (TO) (IT)
(74) Representative: Casuccio, Carlo

(57) **Abstract**

A support base (10) for a video unit (11) contains a plurality of loudspeakers (22, 23 and 27), both low and high frequency. In particular, a low frequency loudspeaker (27) is arranged horizontally on the bottom (14) of the base and faces onto a lower interspace (31), which is bounded by a circular profile (32) extending out from the bottom (14). To improve acoustics, a duct (45) of appropriate length and cross-section puts the inner cavity housing the loudspeakers in communication with the outside, so that the sound waves diffused inside the cavity may also be conveyed towards the outside of the base.

## Description

### BACKGROUND OF THE INVENTION

This invention refers to a support base for a video unit, comprising a support having coupling means suitable for coupling with corresponding means of the said video unit.

Known from Italian patent No. 1128801, filed on behalf of the Ing. C. Olivetti & C., S.p.A. company, is a support base for a video unit provided with articulated coupling means for orienting the video unit with respect to the operator. This support base is suitable only for arranging the video unit in the best position for viewing by the operator, and is exempt of any other function.

Also known are acoustic boxes, inside which loudspeakers, both low frequency and high frequency, are arranged. The acoustic boxes are suitable for being connected to a television, a radio, a sound recorder, or other equipment, and are normally used in pairs for stereophonic sound broadcasts.

### BACKGROUND OF THE INVENTION

The problem that this invention proposes solving is that of achieving a support base for a video unit that integrates the functions of the acoustic boxes, to optimise space and reduce costs.

The problem is solved by the video unit support base according to this invention, which is characterized by the fact that the said support is shaped so as to define an inner cavity and that at least one loudspeaker is housed in this inner cavity.

According to another characteristic of this invention, a low frequency type loudspeaker is arranged horizontally on the bottom of the support base with a membrane thereof for generating sound waves facing downwards.

### BRIEF DESCRIPTION OF THE DRAWINGS

These and other characteristics and advantages of this invention will be apparent in the course of the description that follows, provided by way of a non-exhaustive example, taken in conjunction with the attached drawings where:
Fig. 1 is a front view of a video unit support base according to this invention;
Fig. 2 is a partial section view from the top of the base of Fig. 1;
Fig. 3 is a section along the line III-III of Fig. 2;
Fig. 4 is a view from the bottom of the base of Fig. 1; and
Fig. 5 is an enlarged section view of a detail of the base along the line V-V of Fig. 2.

### DETAILED DESCRIPTION OF THE PREFERRED EMBODIMENT

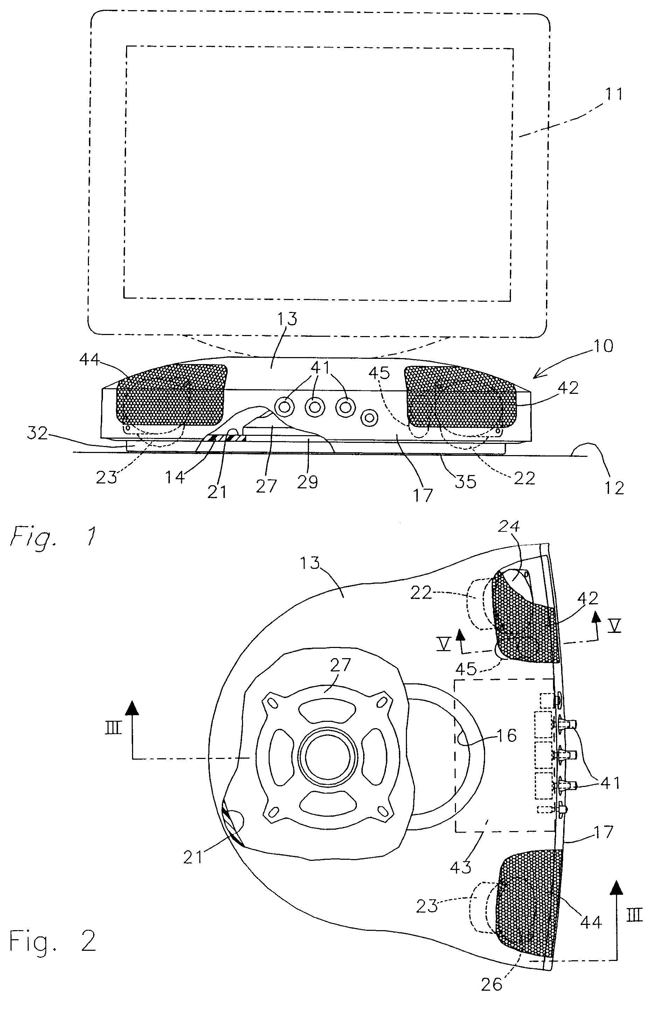

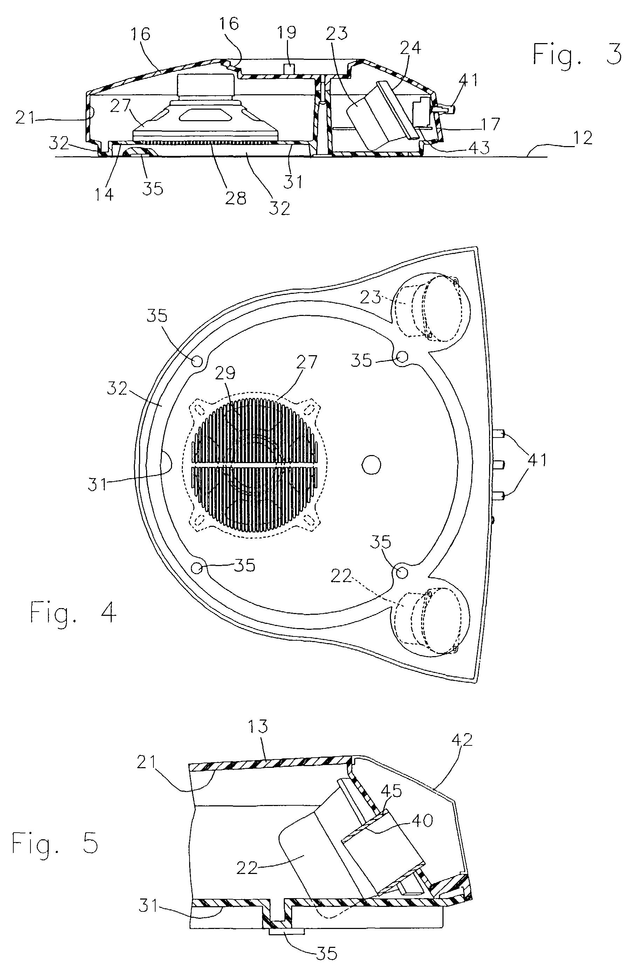

With reference to Figs. 1 and 3, a support base 10 according to the present invention, suitable for bearing a known type video unit 11, comprises a support 13 of plastic material, having a bottom 14 and a front wall 17.

The bottom 14 may be constructed as a separate piece, fixed to the upper part of the support 13 along a perimeter edge thereof.

Made in the upper part of the support 13 is a recess 16 in which coupling means 19 have been provided, suitable for coupling with corresponding coupling means of the video unit 11 to support and orient the latter with respect to the base 10. The coupling means 19 are for example of the type described in Italian patent No. 1128801, quoted above, to which reference may be made for the construction details.

The video unit 11 may be of any known type, such as for example the monitor of a personal computer provided with an audio unit suitable for obtaining sounds from a storage medium, such as an optical disk. The horizontal projection profile of the support 13 (Fig. 2) follows a semicircular line along its rear end, an outward-extending, slightly convex line along its front wall 17, and a curved line, slightly inclining towards the front wall 17, along the side walls.

The support 13 is shaped in such a way as to define a cavity 21 inside, accommodating two loudspeakers 22 and 23 of the type particularly suitable for generating high frequency sounds and commonly called tweeters, and one loudspeaker 27, of the type particularly suitable for generating low frequency sounds, commonly known as a woofer.

The loudspeakers 22 and 23 are embedded in the support 13 at the side edges of the front wall 17. Arranged facing outwards (Figs. 1, 2 and 3), each one has a membrane, 24 and 26 respectively, for generating sounds and both are protected by a grille, 42 and 44 respectively.

The low frequency loudspeaker 27 is housed inside the cavity and is attached to the bottom 14 by attaching means also provided with vibration damping properties.
The loudspeaker 27 has a sound-emitting membrane 28 facing downwards against a grille 29, and also facing a lower interspace 31, laterally bounded by a circular profile 32 made on the underside of the bottom 14.

The base 10 is provided at the bottom with four rubber feet 35 arranged along the circular profile 32 and protruding from the latter by a few tenths of a millimetre, by means of which the base 10 is suitable for being set on a support surface 12. In this way, the profile 32 is practically flush with the support plane 12 with the result that the interspace 31 may be considered substantially closed.

Experimental tests have demonstrated that the interspace 31 significantly improves characteristics of the sounds emitted by the loudspeaker 27, and that this improvement depends largely on the enclosed shape of the interspace.

Provided on the front wall 17 are control knobs 41, for manual control of the acoustic parameters of the sounds emitted by the loudspeakers 22, 23 and 27.

Arranged adjacent to the high frequency loudspeaker 22 on the front wall 17 is a duct 45 with a through hole 40, known to those skilled in the art as the "reflex bus", that puts the cavity 21 in communication with the outside, so as to convey to the outside the sound emitted by the loudspeakers 22, 23 and 27 towards the interior of the cavity 21. In fact, even if most of the sound emitted by the loudspeakers 22, 23 and 27 is diffused towards to the external environment, part of the sound is diffused towards the interior of the cavity 21, where it is reflected from the walls of the latter before being conveyed towards the outside through the duct 45. Section and length of the hole 40 are such that the cavity 21 is acoustically tuned with that portion of sound so as to obtain optimum acoustic yield.

Also housed inside the support 13 are known type electric circuits 43, which are connected to the control knobs 41 and to the loudspeakers 22, 23 and 27 and are suitable for receiving audio signals from equipment outside the base 10, such as for example a personal computer provided with audio signal generating means. In function of the audio signals received and of the adjustments made with the control knobs 41, the circuits 43 provide for control of the loudspeakers 22, 23 and 27.

It is understood that changes and/or improvements may be made to the video unit support base described up to now, without departing from the scope of this invention.

## Claims

1. A support base (10) for a video unit (11), comprising a support (13) having coupling means suitable for coupling with corresponding means of said video unit, characterized by the fact that said support is shaped in such a way as to define an inner cavity (21) and that at least one loudspeaker (22,23,27) is housed in said cavity.

2. A support base (10) according to claim 1, characterized by the fact that said inner cavity is closed at the lower end by a support bottom (14) and that said loudspeaker is of the low frequency type and is arranged horizontally on said support bottom (14) so that one membrane thereof for generating acoustic waves is facing downwards.

3. A support base (10) according to claim 2, characterized by the fact that said bottom (14) is provided with an external profile that defines a lower interspace (31) whereupon said low frequency loudspeaker (27) faces.

4. A support base (10) according to claim 3, characterized by the fact that said external profile (32) comprises a circular ring that encompasses said interspace (31).

5. A support base (10) according to claim 1, wherein said support comprises a front wall (17), characterized by the fact that two high frequency type loudspeakers (22,23) are fitted inside said cavity and are arranged facing said front wall (17).

6. A support base (10) according to any one of the previous claims, characterized by the fact that a duct (40) puts said inner cavity (21) in communication with the outside for outwardly conveying the acoustic waves emitted by said low frequency loudspeaker (27) inside said inner cavity.

7. A support base (10) for a video unit (11) substantially as described, and with reference to the drawings attached.
